# EUROPÄISCHE PATENTSCHRIFT

(11) **EP 0 401 550 B1**
(45) Veröffentlichungstag und Bekanntmachung des Hinweises auf die Patenterteilung: **03.11.1993**
(21) Anmeldenummer: 90109048.0
(22) Anmeldetag: 14.05.1990
(51) Int. Cl.: C05G 3/10, C05G 3/00, B01J 2/30, C01D 3/26, C01D 5/00, C05D 1/00

(54) **Verfahren zur Staubbindung in Granulaten**
Process for binding dust in granulates
Procédé pour fixer la poussière sur des granulés

(30) Priorität: 07.06.1989 DE 3918524
(43) Veröffentlichungstag der Anmeldung: 12.12.1990
(73) Patentinhaber: KALI UND SALZ AKTIENGESELLSCHAFT, D-34111 Kassel (DE)
(72) Erfinder: Singewald, Arno, Prof.-Dr., D-3500 Kassel (DE); Wotschke, Rainer, Dr., D-3201 Diekholzen 2 (DE); Werdelmann, Fritjof, D-3500 Kassel (DE)

(56) Entgegenhaltungen:
- EP-A- 0 227 325
- DD-A- 42 406
- DE-B- 1 070 198
- DE-C- 291 265
- DE-C- 3 618 058
- FR-A- 660 167
- US-A- 2 299 999
- US-A- 3 556 718
- US-A- 3 777 007

## Beschreibung

Die Erfindung betrifft ein Verfahren zur Verhinderung einer Staubbildung beim Verladen oder Transportieren von Kaliumchlorid-Granulaten.

Der Dünger Kaliumchlorid wird in steigendem Maße in granulierter Form hergestellt und in loser Schüttung transportiert. Zur Erzeugung der Granulate wird überwiegend die Trockenpressgranulierung eingesetzt, die das Feinsalz zu Schülpen formt, aus denen die Granulate anschließend durch Brechen und Nachsieben, vorzugsweise im Kornbereich 1,0 bis 4,0 mm, hergestellt werden.

Es ist bekannt, daß bei der Granulierung feinkörniger Stoffe zu Granulaten dem Ausgangsgemisch Granulier-Hilfsmittel zugesetzt werden.

So beschreibt die DE-AS 21 01 585 den Zusatz von Bindemitteln organischen oder anorganischen Charakters, wie Melasse, Starke, Calciumchlorid sowie Alkali und Erdalkalisulfate und Nitrate bei dem Kompaktieren von Thomasphosphat in der Größenordnung von 2 bis 3 %, wobei bestimmte Temperaturbereiche und Zeitabläufe bei der eigentlichen Kompaktierung und Nachbehandlung zwingend vorgeschrieben sind.

Die DE-PS 36 18 058 beschreibt ein Verfahren zum Granulieren von wasserlöslichen Düngemitteln mit hohem Kieseritanteil, das dadurch gekennzeichnet ist, daß dem Granuliergut lösliche und/oder leicht kolloidlösliche Substanzen aus der Klasse der Momo-, Di- und Polysaccharide und/oder deren einfache hydrophile Derivate in fester Form oder als Lösung in der Menge zwischen 0,1 bis 5 % zugesetzt werden, ferner Saccharose in fester Form oder als zuckerreiche Melasse.

In der US-PS 2,299,999 wird Steinsalz mit einem breiten Kornspektrum so mit einer Flüssigkeit behandelt, daß die Mischung feucht bleibt, gut auf einer aufgebrachten Fläche kleben bleibt, aber vorher nicht zum Zusammenbacken neigt. Hierzu wird es mit 0,3 bis 2,5 % MgCl₂, 0,5 bis 3,0 % Wasser und 1 bis 3 % löslichem süßem Zucker behandelt.

In der DE-AS 11 77 177 wird der Zusatz von Magnesiumsulfat und/oder Magnesiumchlorid-Lösung als Granulier-Hilfsmittel angeführt; die DE-OS 33 04 303 beschreibt die Anwendung von Magnesiumchlorid-Lösung als Bindemittel bei der Herstellung von im wesentlichen aus gemahlener Hochofen- oder Stahlwerkschlacke bestehenden Pellets.

Die durch diese Art erzeugten Granulate weisen vor allem durch den angeschlossenen Brechvorgang scharfe Ecken und Kanten auf, die beim Transport bzw. Umschlag des Gutes abgerieben werden und eine während des Transportes und der Weiterverwendung unerwünschte Staubbildung ergeben, die eine untragbare Umweltbelastung zur Folge hat.

Es ist bekannt, daß versucht wird, diesem Phänomen durch Feinstkornabsiebung vor der Verladung beim Erzeuger entgegenzuwirken. Die Praxis hat jedoch gezeigt, daß diese Nachbehandlung allein nicht ausreicht, den anhaftenden Restfeinstaub zu entfernen bzw. die Abriebfestigkeit der Kanten, Ecken und auch Seiten des Granulatkorns zu verbessern.

Aus der DD-PS 136 956 ist ein Verfahren bekannt, die Abriebfestigkeit von Kalidüngemittel-Granulaten dadurch zu verbessern, daß das Kalidüngemittel nach dem Granuliervorgang einer Nachbehandlung unterzogen wird, die darin besteht, nach einer Entstaubung im Wirbelbett eine anschließende Behandlung der Granulatoberfläche mit Wasser oder wäßrigen Zusatzstoffen durchzuführen mit nachgeschalteter Trocknung und Kühlung der so behandelten Granulatkörper. Das Verfahren basiert auf der Möglichkeit, noch vorhandene instabile Spitzen oder Kanten durch Anlösen und Rekristallisation zu beseitigen und somit die Granulatoberfläche zu verfestigen.

Die DE-OS 30 03 883 ergänzt die vorgenannte Patentanmeldung durch die Feststellung auf einen Temperaturbereich von 80 - 100° C, bei dem gemäß der OS ein optimaler Festigkeitsgewinn zu erzielen sein soll, wenn gleichzeitig eine Mindestverweilzeit von 10 sec in einer Atmosphäre hoher Feuchtigkeit gewährleistet ist.

Die beschriebene Behandlungsmethode erfordert einen hohen Aufwand für die der eigentlichen Granulierung und Absiebung nachgeschalteten Anlagen und ist nur anwendbar unmittelbar beim Erzeuger, da die für den Prozeß notwendige Wärme aus der Granulatproduktion stammt. Nicht anwendbar ist diese Methode also z.B. - ganz abgesehen von dem Investitionsaufwand und den dadurch bedingten Instandhaltungskosten - für granulierte Kaliprodukte, die für längere Zeit auf Zwischenlagern gelagert und von dort aus wieder verladen werden müssen.

Bekannt ist, daß eine längere Lagerzeit und die damit verbundenen Einwirkungen physikalischer Art, wie Lagerdruck und Wechsel in der atmosphärischen Feuchte, negative Auswirkungen auf derart behandelte Granulate haben.

Der Erfindung liegt daher die Aufgabe zugrunde, ein Verfahren zur Verhinderung von Staubbildung beim Verladen und Transportieren von Kaliumchlorid-Granulaten zu schaffen, das alle an sie zu stellenden Forderungen, wie Umweltfreundlichkeit, lange Lagerfähigkeit der behandelten Granulate, einfache Anwendbarkeit in optimaler Weise erfüllt.

Das wird erfindungsgemäß dadurch erreicht, daß ein flüssiges Gemisch (Staubbindungsgemisch) aus anorganischer oder organischer Substanz in wäßriger Lösung den Granalien zugesetzt wird, wobei die Substanzen miteinander vollöslich sind, die organische Substanz die Haftwirkung aufweist, die anorganische Substanz den Feuchtigkeitsgehalt des Gemisches steuert und die Menge des Staubbindungsgemisches 0,15 bis 1,0 Gewichtsprozent, bezogen auf das zu behandelnde Gut, beträgt.

Das anzuwendende Staubbindungsgemisch muß also eine Haftwirkung auf der Granulatoberfläche aufweisen, es darf durch übermäßige Feuchtigkeitsaufnahme nicht verdünnt werden und durch Trocknungsvorgänge nicht so viel Feuchtigkeit abgeben, daß seine Haft- und Klebewirkung verlorengeht.

Dabei werden in der Regel Substanzen verwendet, die bei Zimmertemperatur eine relativ hohe Viskosität aufweisen und wasserabweisende Eigenschaften besitzen. Solche viskosen Substanzen sollen einen möglichst hohen Flammpunkt aufweisen, da in der Regel diese viskosen Substanzen zur Erzielung einer guten Verteilung beim Aufbringen bei ca. 80°C verdüst werden müssen.

Die lange Lagerfähigkeit des in dieser Weise behandelten Gutes ist auf das langwirkende Staubbindevermögen des erfindungsgemäßen Staubbindungsgemisches zurückzuführen.

Als organische Substanz ist insbesondere Melasse geeignet, die bei der Rübenzuckerfabrikation als zweite Rohzuckerstufe anfällt und die die oben geschildeten Eigenschaften aufweist.

Als anorganische Substanz kommen u.a. konzentrierte Lösungen von CaCl₂ und MgCl₂ in Frage.

Geeignet ist insbesondere ein homogenes Gemisch aus Melasse mit ca. 47 % Zuckergehalt und einer CaCl₂-Lösung des Konzentrationsbereiches 30 bis 40 % CaCl₂ oder MgCl₂-Lösung zwischen 23 bis 33 % MgCl₂, das die Anforderungen an ein Staubbindemittel in besonderem Maße erfüllt.

Das Herstellen der homogenen Mischung kann problemlos in einem mit einem Rührwerk versehenen Behälter bei Zimmertemperatur durchgeführt werden.

Die Vermischung einer derartigen handelsüblichen Melasse mit einem pH-Wert von 8,2 bis 8,7 mit einer konzentrierten CaCl₂-Lösung, die ebenfalls einen pH-Wert von ca. 8,0 aufweist, führt zu einer chemischen Umsetzung, was aus der Absenkung des pH-Wertes im Gemisch beider Komponenten auf ca, pH 6,0 zu schließen ist. Es ist weiter nicht auszuschließen, daß diese Umsetzung wesentlich dazu beiträgt, daß der Melassenanteil des Gemisches in dieser Form stabil bleibt und dadurch eine monatelange Lagerfähigkeit des Bindemittels als solchem, wie auch die festgestellte Langzeitwirkung auf dem damit behandelten Schüttgut gewährleistet, im Gegensatz zum Verhalten einer reinen Melasse unter gleichen Bedingungen. Weiterhin wird durch die Vermischung eine Absenkung der Viskosität erzielt, so daß nunmehr ein Verpumpen und Versprühen des Staubbindungsgemisches auch in den tieferen Temperaturbereichen ohne Aufheizen problemlos möglich ist.

Das Aufbringen auf die dem Verladevorgang unterworfenen und bereits durch Siebung vom Feinststaub befreiten Granulate kann demnach bei entsprechender Druckanwendung und Düsenauswahl bei Zimmertemperatur erfolgen.

Im Gegensatz zu anderen, rein organischen Staubbindemitteln ist eine Erwärmung nicht unbedingt notwendig.

Die Handhabung des Gemisches ist für die damit Beschäftigten auch aus gesundheitlicher und hygienischer Sicht absolut unproblematisch.

Die zu erzielende Staubbindung wird nach der im folgenden beschriebenen Methode bestimmt:

Proben des zu konditionierenden Granulats werden durch Absiebung von eventuell anhaftenden Partikeln befreit. Danach wird das zu untersuchende Staubbindungsgemisch gleichmäßig verteilt und die jeweils 200 g umfassenden Proben aufgesprüht. Nach dem Auftragen fügt man exakt 1 %, bezogen auf das Granulatgewicht, an Staub (<0,2 mm) des Schüttgutes wieder hinzu und läßt die gesamten Proben in einer Probeflasche fünf Minuten rotierend mischen.

Die so erhaltenen Proben werden dann beispielsweise nach einer Lagerzeit von 1 Tag, 7 Tagen bzw. 20 Tagen untersucht, indem der gesamte Inhalt der Probeflasche auf einer Alpine-Luftstrahlmaschine mit eingelegtem 0,063 mm-Sieb abgesiebt wird.

Die Siebdauer muß exakt drei Minuten betragen. Anschließend wird das eingelegte und mit Staub beladene Filterpapier entweder ausgewogen oder bei löslichen Stäuben, wie z.B. Alkalichlorid, der Staub ausgewaschen und die Menge über Titration bestimmt. Aus diesem Wert errechnet sich die Staubbindung in Prozent.

## Patentansprüche

1. Verfahren zur Verhinderung einer Staubbildung beim Verladen oder Transportieren von Kaliumchlorid-Granulaten, nach dem ein flüssiges Gemisch (Staubbindungsgemisch) aus anorganischer und organischer Substanz in wässriger Lösung den Granalien zugegeben wird, wobei die Substanzen miteinander vollöslich sind, die organische Substanz die Haftwirkung aufweist, die anorganische Substanz den Feuchtigkeitsgehalt des Gemisches steuert und die Menge des Staubbindungsgemisches 0,15 bis 1,0 Gewichtsprozent, bezogen auf das zu behandelnde Gut, beträgt.

2. Verfahren nach Anspruch 1, dadurch gekennzeichnet, daß das Staubbindungsgemisch aus Melasse und einer wässrigen Salzlösung besteht.

3. Verfahren nach Anspruch 2, dadurch gekennzeichnet, daß die Salzlösung eine CaCl₂ -Lösung oder MgCl₂-Lösung ist.

4. Verfahren nach Anspruch 2, dadurch gekennzeichnet, daß das Mengenverhältnis von Melasse und CaCl₂- bzw. MgCl₂-Lösung 1 : 0,5 bis 1 : 2 beträgt.

5. Verfahren nach Anspruch 3, dadurch gekennzeichnet, daß die CaCl₂-Lösung eine Konzentration von 30 bis 40 % CaCl₂; die MgCl₂ -Lösung eine Konzentration von 23 bis 33 % MgCl₂ aufweist.

## Claims

1. A method for preventing dust formation when loading or transporting potassium chloride granules, according to which a liquid mixture (dust-binding mixture) of inorganic and organic substance in aqueous solution is added to the granules, with the substances being completely soluble with one another, the organic substance having the adhesive action, the inorganic substance controlling the moisture content of the mixture and the quantity of the dust-binding mixture being 0.15 to 1.0 percent by weight, relative to the material to be treated.

2. A method according to Claim 1, characterised in that the dust-binding mixture consists of molasses and an aqueous salt solution.

3. A method according to Claim 2, characterised in that the salt solution is a CaCl₂ solution or MgCl₂ solution.

4. A method according to Claim 2, characterised in that the ratio of quantities of molasses and CaCl₂ or MgCl₂ solution is 1 : 0.5 to 1 : 2.

5. A method according to Claim 3, characterised in that the CaCl₂ solution has a concentration of 30 to 40% CaCl₂; the MgCl₂ solution has a concentration of 23 to 33% MgCl₂.

## Revendications

1. Procédé pour empêcher qu'il se forme de la poussière lors du chargement ou du transport de granulés de chlorure de potassium, qui consiste à ajouter aux granulés un mélange liquide (mélange de fixation de la poussière) et de substances minérale organique en solution aqueuse, les substances étant parfaitement solubles les unes avec les autres, la substance organique ayant un effet d'adhérence, la substance minérale réglant la teneur en humidité du mélange et la quantité du mélange de fixation de la poussière représentant de 0,15 à 1,0 % du poids du produit à traiter.

2. Procédé suivant la revendication 1, caractérisé en ce que le mélange de fixation de la poussière est constitué de mélasse et d'une solution aqueuse de sel.

3. Procédé suivant la revendication 2, caractérisé en ce que la solution de sel est une solution de CaCl₂ ou une solution de MgCl₂.

4. Procédé suivant la revendication 2, caractérisé en ce que le rapport quantitatif de la mélasse et de la solution de CaCl₂ ou de MgCl₂ est compris entre 1:0,5 et 1:2.

5. Procédé suivant la revendication 3, caractérisé en ce que la solution de CaCl₂ a une concentration de 30 à 40 % de CaCl₂ et la solution de MgCl₂ a une concentration de 23 à 33 % de MgCl₂.
